# EUROPÄISCHE PATENTSCHRIFT

(11) **EP 1 206 021 B1**
(45) Veröffentlichungstag und Bekanntmachung des Hinweises auf die Patenterteilung: **12.10.2005**
(21) Anmeldenummer: 01125034.7
(22) Anmeldetag: 20.10.2001
(51) Int. Cl.: H02G 3/04, H02G 3/06

(54) **Stossverbinder an Leitungsführungskanälen**
Continuity connector wiring conduits
Connecteur de continuité pour canalisations de câbles

(30) Priorität: 14.11.2000 DE 20019293 U
(43) Veröffentlichungstag der Anmeldung: 15.05.2002
(73) Patentinhaber: Tehalit GmbH, 67716 Heltersberg (DE)
(72) Erfinder: Szabo, Thomas, 66849 Landstuhl (DE); Mayer, Hans, 66851 Bann (DE)
(74) Vertreter: Patentanwälte Möll und Bitterich

(56) Entgegenhaltungen:
- DE-U- 29 508 312

## Beschreibung

Die Erfindung betrifft Vorrichtungen zum Verbinden der Stöße zwischen den Einzelelementen eines metallischen, aus Kanalunterteilen und Kanaloberteilen gebildeten Leitungsführungskanals gemäß dem Oberbegriff des Anspruchs 1.

Metallische Leitungsführungskanäle, umfassend ein Kanalunterteil und wenigstens einen Kanaldeckel, wobei Unterteil und Deckel mit korrespondierenden Verschlussprofilen versehen sind, die eine lösbare Befestigung des Deckels auf dem Unterteil ermöglichen, sind weltweit in großen Stückzahlen seit langer Zeit in Gebrauch. Sie sind üblicherweise lackiert oder pulverbeschichtet, um den Anforderungen des Korrosionsschutzes und der Ästhetik zu genügen.

Um die Passgenauigkeit an den Stößen zweier Kanalelemente zu gewährleisten, haben die Kanalhersteller spezielle, auf ihre Kanäle abgestimmte Steckkupplungen entwickelt.

Um die elektrische Sicherheit zu gewährleisten, müssen alle Bestandteile von metallischen Leitungsführungskanälen, die ein Benutzer berühren könnte, geerdet sein. Dazu sind die Leitungsführungskanäle mit entsprechenden Anschlüssen ausgerüstet, die über Potentialausgleichsleitungen miteinander verbunden werden. Diese Erdungsanschlüsse werden meist gesondert hergestellt und werksseitig mit den Kanälen verbunden. Bei der Oberflächenbeschichtung der Kanäle muss darauf geachtet werden, dass die Erdungsanschlüsse frei bleiben. Außerdem müssen die Potentialausgleichsleitungen getrennt hergestellt und auf der Baustelle montiert werden. Dies ist mit einem erheblichen Aufwand verbunden.

Es hat daher nicht an Versuchen gefehlt, den vorgeschriebenen Potentialausgleich auf andere Weise herzustellen.

Aus der EP-B 0 518 404 ist eine Konstruktion bekannt, bei der die mit dem Kanalunterteil korrespondierenden Teile des Kanaldeckels so verformt sind, dass scharfe Kanten entstehen, die sich beim Aufrasten des Deckels auf das Kanalunterteil in die Oberfläche des Deckelhalteprofils eingraben und so den elektrischen Kontakt herstellen.

Aus der DE-U 90 12 163, EP-B 469 457, DE-A 197 37 893 oder DE-C 36 36 412 sind Hilfsteile bekannt, die auf das Kanalunterteil bzw. den Kanaldeckel aufgesteckt werden. Diese Hilfsteile sind mit scharfen Kanten ausgerüstet, die beim Verbinden von Kanalunterteil und Deckel die Oberflächenbeschichtung durchschneiden und so die elektrische Verbindung herstellen. Diese Hilfsteile müssen separat hergestellt, gelagert, bestellt und vor Ort montiert werden. Dies ist mit einem nicht unerheblichen Aufwand verbunden. Auch besteht die Gefahr, dass der Installateur das Anbringen dieser Zusatzelemente vergisst, so dass der Benutzer des Leitungsführungskanals gefährdet ist.

Aus der DE-U 295 08 312 ist eine Einrichtung zum Potentialausgleich bekannt, die gleichzeitig als Kabelrückhalteklammer dient. Diese besitzt an ihren beiden Enden U-förmige Profile, die in einer Mehrzahl von scharfen Spitzen enden. Die Potentialausgleichsklammer wird vom Kanalinneren aus auf die Deckelhalteprofile des Kanalunterteils aufgeschoben, wobei die scharfen Spitzen sich in die Lack- bzw. Metalloberfläche eingraben und den elektrischen Kontakt herstellen.

Sehr gut gelöst sind bei dieser bekannten Potentialausgleichsklammer die Funktionen Kabelrückhaltung und Kanalstabilisierung. Ebenfalls recht gut funktioniert die Herstellung des elektrischen Kontaktes zwischen Klammer und Kanalunterteil. Weniger gut gelöst dagegen ist die Herstellung des elektrischen Kontaktes zum Kanaldeckel. Unbefriedigend gelöst ist die Montage der Klammer am Kanalunterteil; ist das Kanalunterteil mit elektrischen Kabeln und Leitungen gefüllt, lässt sich die Klammer nicht mehr montieren oder demontieren.

Der vorliegenden Erfindung liegt die Aufgabe zugrunde, einen Stoßverbinder, der auch als Potentialausgleichsklammer wirkt, anzugeben, der sich jederzeit und einfach montieren und demontieren lässt und die Herstellung einwandfreier elektrischer Kontakte sowohl zum Kanalunterteil als auch zum Kanaldeckel ermöglicht, ohne die Funktionen eines Stoßverbinders und einer Kanalklammer zu vernachlässigen.

Diese Aufgabe wird gelöst durch eine Vorrichtung mit den Merkmalen des Anspruchs 1.

Ein wesentlicher Vorteil der erfindungsgemäßen Vorrichtung besteht darin, dass diese von außen auf das Kanalunterteil aufgesetzt wird. Montage und Demontage der werden somit durch im Kanal verlegte Leitungen nicht behindert. Des weiteren sind die Kontaktelemente als scharfe Schneidkanten ausgebildet. Dies bedeutet, dass oberflächliche Lack- oder Pulverschichten aufgeschnitten und nicht aufgekratzt werden. Die Beschädigungen bleiben gering. Durch den dank der scharfen Schneidkanten hohen Kontaktdruck ist auch die Kontaktsicherheit sehr hoch, und zwar sowohl zum Kanalunterteil als auch zum Kanaldeckel.

Gemäß einer Weiterbildung der Erfindung sind die Unterkanten der Schneidkanten an den zweiten Haltefingern angeschrägt. Dank dieser Anschrägung werden auch dicke Lack- oder Pulverschichten so weit aufgeschnitten, dass der gewünschte niederohmige Kontakt zustande kommt.

Gemäß einer bevorzugten Weiterbildung der Erfindung sind dritte Haltefinger vorgesehen, die als Haken ausgebildet sind und ebenfalls von außen die Außenseite der Deckelhalteprofile untergreifen. Diese dritten Haltefinger verhindern, dass beim Abnehmen eines Kanaldeckels versehentlich auch die Klammer abgezogen wird, was den Potentialausgleich stören würde.

Gemäß einer Weiterbildung der Erfindung sind die Haltefinger an jedem Ende des Klammerkörpers paarweise angeordnet. Derartige Potentialausgleichsklammern können nicht nur die elektrische Verbindung zwischen Kanalunterteil und Deckel herstellen, sondern auch einen Stoß zwischen zwei Kanalunterteilen und zwei Kanaldeckeln überbrücken.

Vorteilhafterweise sind die Haltefinger federnd ausgebildet. Dies gewährleistet die Herstellung guter elektrischer Kontakte und ermöglicht den Ausgleich etwaiger Toleranzen.

Zur Versteifung des Klammerkörpers sind in diesen Versteifungssicken oder dergleichen eingebracht.

Anhand der Zeichnung soll die Erfindung in Form eines Ausführungsbeispiels näher erläutert werden. Es zeigen
- Fig. 1: eine Draufsicht auf einen auch als Potentialausgleichsklammer wirkenden Stoßverbinder,
- Fig. 2: eine Frontansicht der Vorrichtung in Fig. 1,
- Fig. 3: eine Seitenansicht der Vorrichtung in Fig. 1 und
- Fig. 4: einen Ausschnitt aus dem Bereich eines Deckelhalteprofils eines Leitungsführungskanals in vergrößertem Maßstab.

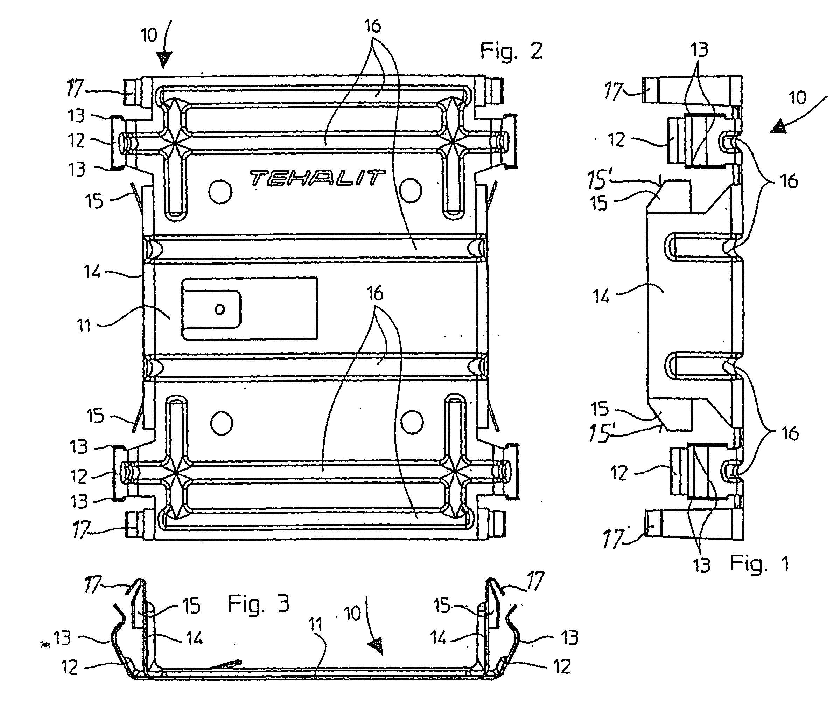

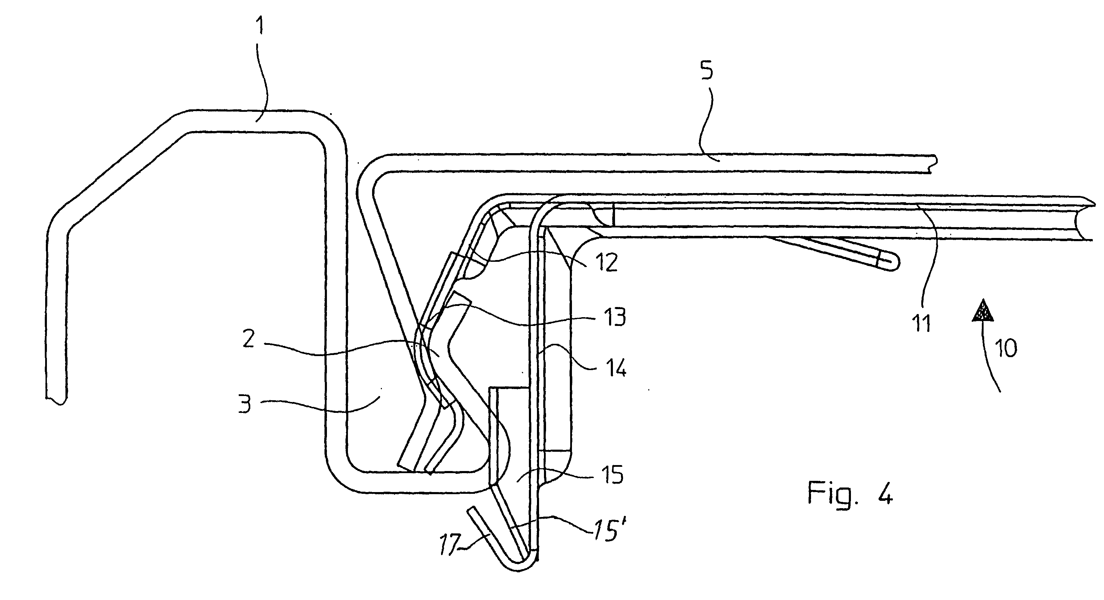

Fig. 1 als Draufsicht, Fig. 2 als Frontansicht und Fig. 3 als Seitenansicht zeigen einen auch als Potentialausgleichsklammer wirkenden Stoßverbinder 10, der elektrische Kontakte zwischen einem oder mehreren Kanalunterteilen 1 (Fig. 4) und einem oder mehreren Kanaldeckeln 5 herstellt.

Der Stoßverbinder 10 besitzt einen Klammerkörper 11, der durch Sicken 16 versteift ist. Sowohl an der rechten als auch an der linken Seite des Klammerkörpers 11 erkennt man je ein Paar von ersten Haltefingern 12 und zweiten Haltefingern 14. An jedem Haltefinger 12, 14 sind scharfe Schneidkanten 13, 15 vorgesehen. Diese Schneidkanten 13, 15 durchschneiden isolierende Oberflächenschichten auf Kanalunterteil 1 bzw. Kanaldeckel 5 und stellen so den für den Potentialausgleich erforderlichen elektrischen Kontakt her.

Die ersten Haltefinger 12 sind so dimensioniert, dass sie von außen in den U-förmigen Innenraum 3 des Deckelhalteprofils 2 am Kanalunterteil 1 eingreifen. Diese Situation ist in Fig. 4 dargestellt. Die zweiten Haltefinger 14 sind so dimensioniert, dass sie sich ebenfalls von außen federnd an die Außenseite des Deckelhalteprofils 2 anlegen. Dabei sind die Schneidkanten 15 gegen das Deckelhalteprofil 2 angewinkelt und durchschneiden so die isolierenden Oberflächenschichten auf dem Deckelhalteprofil 2. Die Unterkanten 15' sind angeschrägt, damit auch dicke Isolierschichten durchschnitten werden.

Wie Fig. 4 weiterhin erkennen lässt, schneiden die scharfen Schneidkanten 13 der ersten Haltefinger 12 beim Aufsetzen des Kanaldeckels 5 durch dessen Oberflächenbeschichtung und stellen den elektrischen Kontakt her.

Dadurch, dass die ersten und zweiten Haltefinger 12, 14 an jedem Ende des Klammerkörpers 11 jeweils paarweise angeordnet sind, kann die in den Fig.1 bis 3 dargestellte Potentialausgleichsklammer auch die Stöße von Kanalunterteilen 1 bzw. Kanaldeckeln 5 überbrücken.

An der rechten und linken Seite des Stoßverbinders 10 sind endlich noch dritte Haltefinger 17 vorgesehen. Diese sind als Haken ausgebildet und untergreifen von außen her die Deckelhalteprofile 2. Diese Haken 17 verhindern, dass der Stoßverbinder 10 sich versehentlich lösen kann, wenn ein Kanaldeckel 5 abgenommen wird, welcher eine besonders feste Verbindung zu den ersten Haltefingern 12 besitzt.

## Patentansprüche

1. Vorrichtung zum Verbinden der Stöße zwischen den Einzelelementen eines metallischen, aus Kanalunterteilen (1) und Kanaldeckeln (5) gebildeten Leitungsführungskanals in Form eines Stoßverbinders (10) aus Metallblech, die im wesentlichen umfasst:
- einen Klammerkörper (11),
- mit den Deckelhalteprofilen (2) des Kanalunterteils (1) kooperierende Haltefinger (12, 14, 17) an den Enden des Klammerkörpers (11)
- und Kontaktelemente (13, 15) an den Haltefingern (12, 14), die sich in die Oberflächen von Kanalunterteil- und -deckel (1, 5) eingraben und dabei einen elektrischen Kontakt herstellen,
**gekennzeichnet durch** die Merkmale:
- vorgesehen sind
- erste Haltefinger (12), die von außen in eine Nut (3) der Deckelhalteprofile (2) eingreifen,
- und zweite Haltefinger (14), die sich ebenfalls von außen gegen die Außenseite der Deckelhalteprofile (2) anlegen,
- die Kontaktelemente sind als scharfe Schneidkanten (13, 15) ausgebildet, die sich im wesentlichen parallel zur Montagebewegung erstrecken,
- die Schneidkanten (13) an den ersten Haltefingern (12) stellen den Kontakt zum Kanaldeckel (5) her,
- die Schneidkanten (15) an den zweiten Haltefingern (14)
- sind gegen das Deckelhalteprofil (2) angewinkelt
- und stellen den Kontakt zum Kanalunterteil (1) her.

2. Vorrichtung nach Anspruch 1, **gekennzeichnet durch** das Merkmal:
- die Unterkante (15') der Schneidkanten (15) an den zweiten Haltefingern (14) ist angeschrägt.

3. Vorrichtung nach Anspruch 1 oder 2, **gekennzeichnet durch** das Merkmal:
- vorgesehen sind dritte Haltefinger (17), die als Haken ausgebildet sind und ebenfalls von außen die Außenseite der Deckelhalteprofile (2) untergreifen.

4. Vorrichtung nach einem der Ansprüche 1 bis 3, **gekennzeichnet durch** das Merkmal :
- an jedem Ende des Klammerkörpers (11) sind die Haltefinger (12, 14, 17) paarweise angeordnet.

5. Vorrichtung nach Anspruch 1 oder 2, **gekennzeichnet durch** das Merkmal:
- die Haltefinger (12, 14, 17) sind federnd ausgebildet.

6. Vorrichtung nach einem der Ansprüche 1 bis 3, **gekennzeichnet durch** das Merkmal:
- im Klammerkörper (11) sind Versteifungssicken (16) vorgesehen.

## Claims

1. Device for connecting the joints between the individual elements of metallic wiring trunking, formed from trunking lower parts (1) and trunking covers (5), in the form of a butt joint (10) of sheet metal, which essentially comprises:
- a clamp body (11),
- retaining fingers (12, 14, 17), co-operating with the cover retaining profiles (2) of the trunking lower part (1), at the ends of the clamp body (11),
- and contact elements (13, 15) at the retaining fingers (12, 14) which dig into the surfaces of the trunking lower part and cover (1, 5) and in the process establish electrical contact,
**characterised by** the features:
- there are provided
- first retaining fingers (12) which engage from outside in a groove (3) of the cover retaining profiles (2),
- and second retaining fingers (14) which are likewise applied from outside to the exterior of the cover retaining profiles (2),
- the contact elements are formed as sharp cutting edges (13, 15) which extend substantially parallel to the assembly movement,
- the cutting edges (13) at the first retaining fingers (12) establish contact with the trunking cover (5),
- the cutting edges (15) at the second retaining fingers (14)
- are bent at an angle with respect to the cover retaining profile (2)
- and establish contact with the trunking lower part (1).

2. Device according to Claim 1, **characterised by** the feature:
- the lower edge (15') of the cutting edges (15) at the second retaining fingers (14) is bevelled.

3. Device according to Claim 1 or 2, **characterised by** the feature:
- third retaining fingers (17) are provided, these being formed as hooks and likewise engaging from outside under the exterior of the cover retaining profiles (2).

4. Device according to any one of Claims 1 to 3, **characterised by** the feature:
- the retaining fingers (12, 14, 17) are disposed in pairs at each end of the clamp body (11).

5. Device according to Claim 1 or 2, **characterised by** the feature:
- the retaining fingers (12, 14, 17) are formed so as to be resilient.

6. Device according to any one of Claims 1 to 3, **characterised by** the feature:
- stiffening beads (16) are provided in the clamp body (11).

## Revendications

1. Dispositif pour raccorder les bords ou bouts entre les éléments individuels d'une canalisation de câbles métallique formée de parties inférieures de canalisation (1) et de couvercles de canalisation (5), se présentant sous la forme d'un connecteur bout à bout (10) en tôle métallique, lequel comprend essentiellement :
- un corps de serrage (11),
- des doigts de retenue (12, 14, 17) coopérant avec les profilés de fixation de couvercle (2) de la partie inférieure de canalisation (1) aux extrémités du corps de serrage (11)
- et des éléments de contact (13, 15) sur les doigts de retenue (12, 14) qui s'enfoncent dans les surfaces de la partie inférieure et du couvercle de canalisation (1, 5) et établissent ce faisant un contact électrique,
**caractérisé par le fait que** :
- il est prévu
- des premiers doigts de retenue (12) qui s'engagent par l'extérieur dans une rainure (3) des profilés de fixation de couvercle (2)
- et des deuxièmes doigts de retenue (14) qui s'appuient également par l'extérieur contre la face extérieure des profilés de fixation de couvercle (2),
- les éléments de contact sont formés d'arêtes coupantes aiguisées (13, 15) qui s'étendent essentiellement parallèlement au mouvement de montage,
- les arêtes coupantes (13) sur les premiers doigts de retenue (12) établissent le contact avec le couvercle de canalisation (5),
- les arêtes coupantes (15) sur les deuxièmes doigts de retenue (14)
- sont pliées vers le profilé de fixation de couvercle (2)
- et établissent le contact avec la partie inférieure de canalisation (1).

2. Dispositif selon la revendication 1, **caractérisé par** l**e fait que** :
- la partie inférieure (15') des arêtes coupantes (15) sur les deuxièmes doigts de retenue (14) est biseautée.

3. Dispositif selon la revendication 1 ou 2, **caractérisé par le fait que** :
- il est prévu des troisièmes doigts de retenue (17) qui sont en forme de crochet et saisissent par en dessous, également par l'extérieur, la face extérieure des profilés de fixation de couvercle (2).

4. Dispositif selon l'une des revendications 1 à 3, **caractérisé par le fait que** :
- les doigts de retenue (12, 14, 17) sont disposés par paires à chaque extrémité du corps de serrage (11).

5. Dispositif selon la revendication 1 ou 2, **caractérisé par le fait que** :
- les doigts de retenue (12, 14, 17) sont conçus de manière à faire ressort.

6. Dispositif selon l'une des revendications 1 à 3, **caractérisé par le fait que** :
- des nervures raidisseuses sont prévues dans le corps de serrage (11).
